**Europäisches Patentamt**

**European Patent Office**

**Office européen des brevets**

(19)

(11) Veröffentlichungsnummer: **0 046 984**
**A2**

(12)

# EUROPÄISCHE PATENTANMELDUNG

(21) Anmeldenummer: **81106639.8**

(22) Anmeldetag: **26.08.81**

(51) Int. Cl.³: **B 23 K 9/02**

(30) Priorität: **02.09.80 DE 3033033**

(43) Veröffentlichungstag der Anmeldung:
**10.03.82 Patentblatt 82/10**

(84) Benannte Vertragsstaaten:
**FR GB IT**

(71) Anmelder: **Berg, Paul, Dr.-Ing.**
**Siegstrasse 89**
**D-5900 Siegen 21(DE)**

(72) Erfinder: **Berg, Paul, Dr.-Ing.**
**Siegstrasse 89**
**D-5900 Siegen 21(DE)**

(74) Vertreter: **Patentanwälte Beetz sen. - Beetz jr. - Heidrich**
**- Timpe - Siegfried - Schmitt-Fumian**
**Steinsdorfstrasse 10**
**D-8000 München 22(DE)**

(54) **Vorrichtung zum elektrischen Innenschweissen von Grossrohren.**

(57) Gegenstand der Erfindung ist eine Vorrichtung zum elektrischen Innenschweißen von Großrohren (1), bestehend aus mindestens einem Ständer (4, 5), aus einem vom Ständer horizontal gehaltenen Längsholm (2), an dem mindestens ein Schweißkopf (3), Führungen für mindestens einen Schweißdraht sowie Halterungen für die elektrischen Kabel und für Schutzgasleitungen angeordnet sind, und aus einem äußeren Traggestell (6) mit angetriebenen Stützrollen (7) für das zu schweißende Großrohr. Um die Großrohre im Durchlaufbetrieb ohne Bewegungsumkehr schweißen zu können, ist erfindungsgemäß an jedem Ende des Längsholmes (2) ein Ständer (4, 5) vorgesehen, von denen jeder eine lösbare Spann- und Verriegelungseinrichtung (40 bis 42) sowie elektrische Leistungsschalter aufweist und aus einer den Längsholm (2) haltenden Betriebsstellung (A) in eine den Durchlauf des Großrohres (1) zulassende Ruhestellung (B) bewegbar ist.

Fig.2

- 1 -

Dr.-Ing. Paul Berg

Siegstraße 89

D-5900 Siegen 21

## Vorrichtung zum elektrischen Innenschweißen von Großrohren

Die Erfindung betrifft eine Vorrichtung zum elektrischen Innenschweißen von Großrohren, bestehend aus mindestens einem Ständer, aus einem vom Ständer gehaltenen horizontalen Längsholm, an dem mindestens ein Schweißkopf, Führungen für mindestens einen Schweißdraht sowie Halterungen für die elektrischen Kabel und für Schutzgasleitungen angeordnet sind, und aus einem äußeren Traggestell mit angetriebenen Stützrollen für das zu schweißende Großrohr.

In der Vergangenheit war es üblich, die auf Biegemaschinen aus Walzbandabschnitten geformten Schlitzrohre lediglich von außen zu schweißen, wobei die einzelnen Rohrschüsse stumpf an stumpf zusammengeheftet wurden und einen Schweißautomat hintereinander durchliefen. Zur Erzielung hoher Schweißleistungen wird in der Regel mit mehreren Schweißelektroden im Automaten gearbeitet. Die gestiegenen Festigkeits- und Sicherheitsanforderungen können jedoch von lediglich außen stumpf
geschweißten Rohren nicht immer erfüllt werden. Da
naturgemäß die Schweißverbindung derartiger Rohre hinsichtlich der Festigkeit die Schwachstellen bilden,
ging man dazu über, die längsgeschlitzten Rohre in zwei
aufeinanderfolgenden Schritten einmal von außen und
anschließend von innen längs zu schweißen.

Zum Innenschweißen von zuvor bereits außengeschweißten Großrohren ist eine Anlage entwickelt worden, die einen einseitig in einen Ständer fest eingespannten
Längsholm aufweist. Am freien Ende des Längsholmes befindet sich mindestens ein Schweißkopf, welchem
ein oder mehrere Schweißdrähte über Führungen am Längsholm und am Ständer zugeführt werden. In einem vorbestimmten Abstand unter dem Längsholm ist eine Tragkonstruktion mit angetriebenen Laufrollen vorgesehen.
Die bereits außen geschweißten Rohrschüsse werden
mittels einer Zuführeinrichtung, z. B. Laufrollen, über
den Längsholm geschoben, dessen Länge größer als die
Länge des jeweiligen Rohrschusses ist. Sobald die
Stirnkante des Rohrschusses in den Bereich des am freien
Holmende befestigten Schweißkopfes gelangt, wird über
eine elektrische Steuereinrichtung der Schweißstrom
eingeschaltet und der Schweißvorgang beginnt. Das auf
den angetriebenen Laufrollen der Tragkonstruktion aufliegende Rohr wird in seiner ganzen Länge an dem im
Rohrinneren befindlichen Schweißkopf entlang geführt.
Nachdem die hintere Stirnkante des Rohrschusses den Schweißkopf passiert hat, kehrt sich die Richtung der Antriebsbewegung um, so daß der Rohrschuß bei abgeschaltetem Schweißstrom in Gegenrichtung verfahren wird und vom Längsholm freikommt. Es ist auch möglich, den jeweiligen Rohrschuß zuerst vollständig über den Längsholm einzufahren und erst während der Rücklaufbewegung die Innenschweißnaht zu legen. Ein wesentlicher Nachteil dieses Vorgehens liegt in der reversierenden Bewegung jedes Rohrschusses. Es müssen reversierende Antriebe für die Laufrollen der Tragkonstruktion und Mittel zum Abbremsen und Positionieren der Rohre in genau vorgegebenen Lagen vorgesehen werden. Je nach der Betriebsweise stellt ferner entweder das Einfahren oder das Ausfahren des jeweiligen Rohrschusses eine beträchtliche Totzeit dar, da die maximalen Geschwindigkeiten für diese Bewegungen aufgrund der hohen Gewichte der einzelnen Rohrschüsse begrenzt sind. Da jedes geschweißte Rohr vollständig aus der Anlage herausgefahren und anschließend quer bewegt werden muß, bevor ein neuer Rohrschuß seitlich in die Flucht zum Längsholm eingebracht und über den Längsholm vorgeschoben werden kann, ergeben sich notwendigerweise entsprechend lange Totzeiten und es besteht keine Möglichkeit für einen Durchlaufbetrieb. Darüber hinaus ist durch die Bewegungsumkehr der Rohrschüsse der Platzbedarf relativ groß.

Aufgabe der Erfindung ist es, eine Vorrichtung zum Innenschweißen von Großrohren der angegebenen Gattung zu schaffen, die in einen Rollgang integriert werden kann

Innen
und das Schweißen der Großrohre im Durchlaufbetrieb
ohne Umkehr ihrer Bewegungsrichtung erlaubt.

Erfindungsgemäß wird diese Aufgabe dadurch gelöst, daß
an jedem Ende des Längsholmes ein Ständer vorgesehen
ist, wobei mindestens einer der Ständer elektrische
und eine Schweißpulver Zu- und Abführung
Leistungsschalter aufweist und jeder Ständer eine lösbare Spann- und Verriegelungseinrichtung zur Halterung
eines Endes des Längsholmes besitzt und wobei beide
Ständer aus einer den Längsholm haltenden Betriebsstellung A in eine den Durchlauf des Großrohres zulassende Ruhestellung B bewegbar ist.

Die bewegliche Anordnung und Ausbildung der beiden
Ständer eröffnet die Möglichkeit, im Durchlauf zu
schweißen, wobei beim Einfahren eines Rohrschusses
der Längsholm an seinem in Bewegungsrichtung hinteren
Ende und beim Herausfahren des innengeschweißten Rohrschusses der Längsholm an seinem in Bewegungsrichtung
vorderen Ende durch den jeweils in seiner Betriebsstellung bewegten Ständer gehalten ist. Die Zuführung
des Schweißstromes erfolgt über geeignete Leistungsschalter, die entweder von Hand oder auch durch die
Bewegung des jeweiligen Ständers in seine Betriebsposition selbsttätig geschlossen werden. Eine gewünschte
Anzahl von Schweißdrähten wird von Spulen abgezogen, die
am Längsholm drehbar angeordnet sind, so daß ein Durchlaufbetrieb durch die Schweißdrahtzuführung nicht behindert wird.

In zweckmäßiger Ausgestaltung der Erfindung ist
jeder Ständer an einem im Bodenniveau angeordneten Tragrahmen angelenkt und mittels hydraulischer Stellzylinder aus einer liegenden Ruhestellung B in eine aufrechte Betriebsstellung A schwenkbar. Diese Ausgestaltung ist konstruktiv besonders einfach und eröffnet die Möglichkeit, für jeden Ständer zwei Stützen vorzusehen, die über gesonderte hydraulische Stellzylinder einzeln und in einer bestimmten Zeitfolge in ihre Betriebs- bzw. ihrer Ruhestellung geschwenkt werden können.

Eine andere Ausgestaltung der Erfindung zeichnet sich dadurch aus, daß die Spann- und Verriegelungseinrichtung mindestens einen hydraulischen Spannzylinder enthält, an dessen Kolbenstange ein Druckstück mit einer an die Querschnittsform des Längsholm-Endes angepaßten Aufnahme befestigt ist. Nachdem der Ständer in seine Betriebsstellung A bewegt worden ist, wird der Längsholm durch Betätigen dieses hydraulischen Spannzylinders zwischen dem Druckstück und einem am Ständer vorgesehenen festen Gegenhalter eingespannt. Eine stabile seitliche Halterung läßt sich zweckmäßig dadurch erzielen, daß dieser Spannzylinder in der jeweils äußeren Stütze jedes Ständers vorgesehen ist und daß am freien Ende der inneren Stütze des jeweiligen Ständers eine profilierte Laufrolle den Längsholm unterfaßt und seine seitlichen Bewegungen verhindert.

Die Lage des frei vorkragenden Endes des Längsholmes und des an diesem Ende vorgesehenen Schweißkopfes kann noch weiter dadurch stabilisiert werden, daß im Bereich des Schweißkopfes am Längsholm Stützelemente befestigt sind, die mit ihren freien Enden über z. B. Laufrollen an der Rohrrinnenwand abgestützt sind. Da das Rohr im Bereich des Schweißkopfes auf Laufrollen des äußeren Traggestelles aufliegt, ergibt sich über die Rohrwand und die Stützelemente eine zusätzliche Halterung dieses freien Endes des Längsholmes.

Weitere zweckmäßige Ausgestaltungen der Erfindung sind Gegenstand von Unteransprüchen.

Im folgenden wird eine besonders zweckmäßige Ausführung der erfindungsgemäßen Schweißvorrichtung anhand der Zeichnung im einzelnen beschrieben. Es zeigen:

Fig. 1 bis 4 schematisch eine Seitenansicht der Gesamtanlage in verschiedenen Betriebszuständen;

Fig. 5 schematisch den Schnitt A-B gemäß Fig. 3;

Fig. 6 schematisch den Schnitt C-D gemäß Fig. 3;

Fig. 7 eine Stirnansicht der Anlage in Richtung des Pfeiles X gemäß Fig. 3.

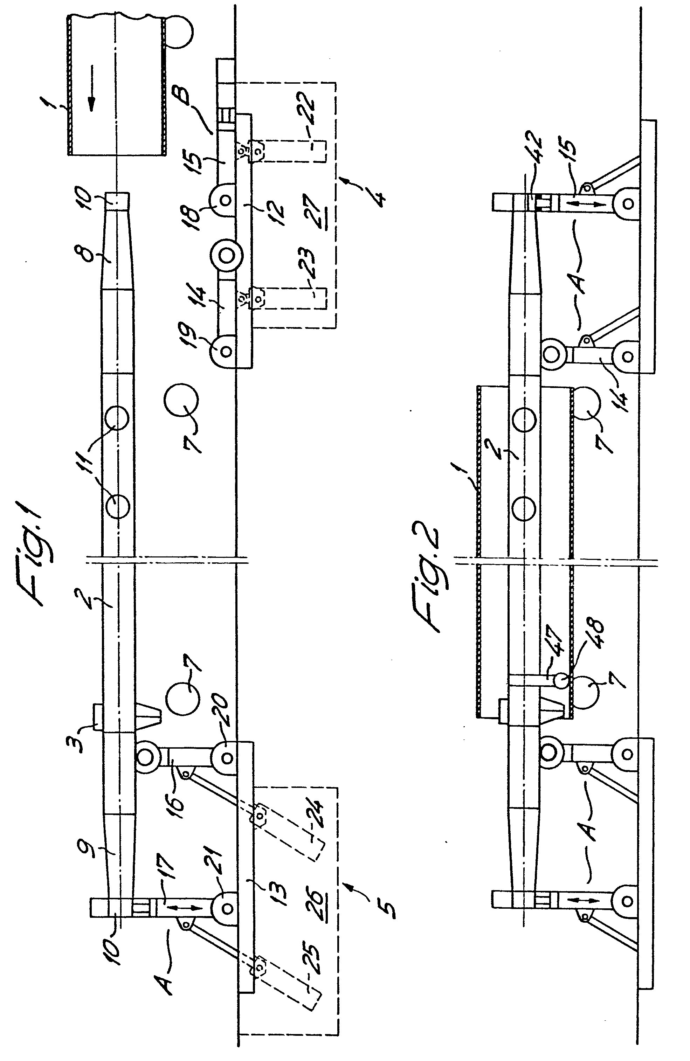

Die in den Fig. 1 bis 4 - verkürzt - dargestellte Vorrichtung zum Innenschweißen von Großrohren 1 enthält als wesentliche Bestandteile einen horizontal überflur angeordneten Längsholm 2 mit daran befestigtem Schweißkopf 3, je einen vorderen und hinteren Ständer 4 bzw. 5 sowie ein ortsfestes Traggestell 6 (vgl. Fig.5) mit Laufrollen 7. Der Längsholm 2 weist an jedem Ende je ein konisches Übergangsstück 8, 9 und je einen zylindrischen Endzapfen 10, 11 auf. An den beiden Seitenflächen des als Vierkant-Hohlprofil ausgebildeten Längsholmes· 2 sind hintereinander mehrere Drahtspulen 11 drehbar gelagert, auf denen die über geeignete Führungen zu den verschiedenen Elektroden des Schweißkopfes 3 laufenden Schweißdrähte aufgewickelt sind.

Jeder Ständer 4, 5 besteht aus einem ortsfesten Tragrahmen 12, 13 und aus jeweils zwei Stützen 14, 15 bzw. 16, 17, die über Klapplager 18, 19 bzw. 20, 21 an den Tragrahmen 12 bzw. 13 angelenkt und über hydraulische Stellzylinder 22 bis 25 aus einer aufrechten Betriebsstellung A (vgl. linker Teil der Fig. 1) in eine liegende Ruhestellung B - und umgekehrt - geschwenkt werden. Die Stellzylinder 22, 23 bzw. 24,25 ragen jeweils in eine im Fundament vorgesehene Grube 26 bzw. 27 frei hinein, wobei ihre Kolbenstangen gelenkig an den jeweiligen Stützen angreifen.

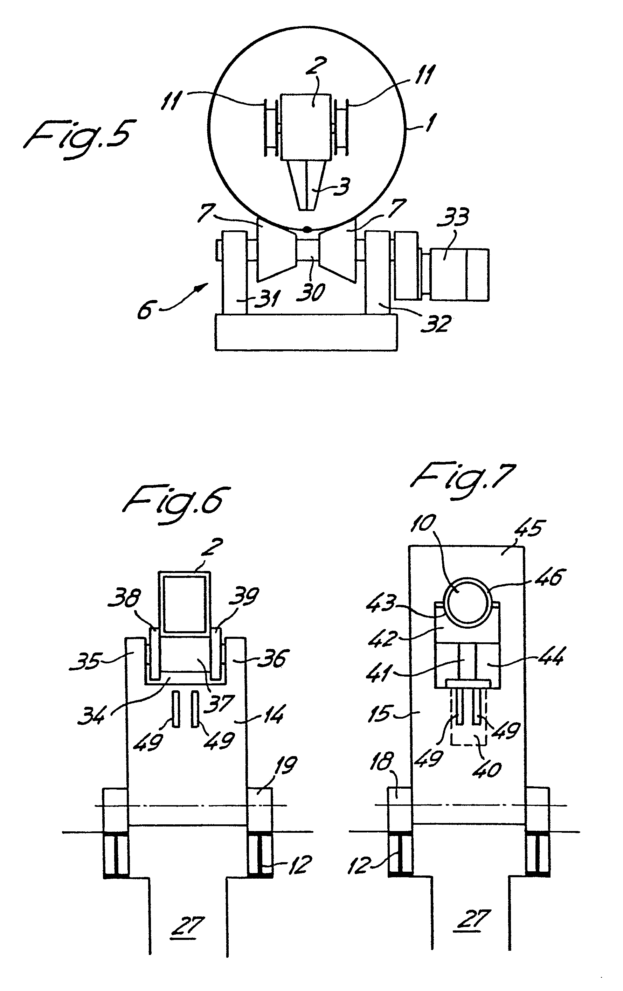

Wie aus Fig. 5 ersichtlich, liegt das außen geschweißte Rohr 1 auf dem Laufrollenpaar 7 auf und wird durch die kegelstumpfförmige Ausbildung der beiden Laufrollen 7 zur Mitte hin zentriert. Die durchgehende Welle 30 dieses Laufrollenpaares 7 ist beidseitig in zwei Vertikalstreben 31, 32 gelagert und wird über einen Antrieb 33 in Drehbewegung versetzt. Wie aus Fig. 6 ersichtlich, weist die biegesteife Stütze 14 an ihrem oberen freien Ende eine Ausnehmung 34 mit zwei seitlichen Lageraugen 35, 36 sowie eine darin drehbar gelagerte Laufrolle 37 mit seitlichen Ringbunden 38, 39 auf. Der Abstand zwischen den beiden Ringbunden 38, 39 entspricht der Breite des Längsholmes 2, so daß der Längsholm insbesondere für seine einseitige Einspannung seitlich durch die Laufrolle 37 und die Ringbunde 38, 39 festgelegt wird.

Die in Fig. 7 dargestellte einfahrseitig äußerste Stütze 15 des Ständers 4 weist einen hydraulischen Spannzylinder 40 in ihrer Längsachse auf, an dessen Kolbenstange 41 ein Druckstück 42 befestigt ist. In der oberen Stirnfläche dieses Druckstückes ist eine halbzylindrische Aufnahme 43 ausgebildet, deren Form der Außenkontur des zylindrischen Endzapfens 10 des Längsholmes 2 entspricht. Das Druckstück 42 ist in einem Fenster 44 in der Stütze 15 seitlich geführt. Ein Querhaupt 45 begrenzt das Fenster 44 nach oben und bildet zusammen mit einer halbzylindrischen Aufnahme 46 einen Gegenhalter für den Endzapfen 10.

Die dargestellte und beschriebene Schweißvorrichtung arbeitet wie folgt:

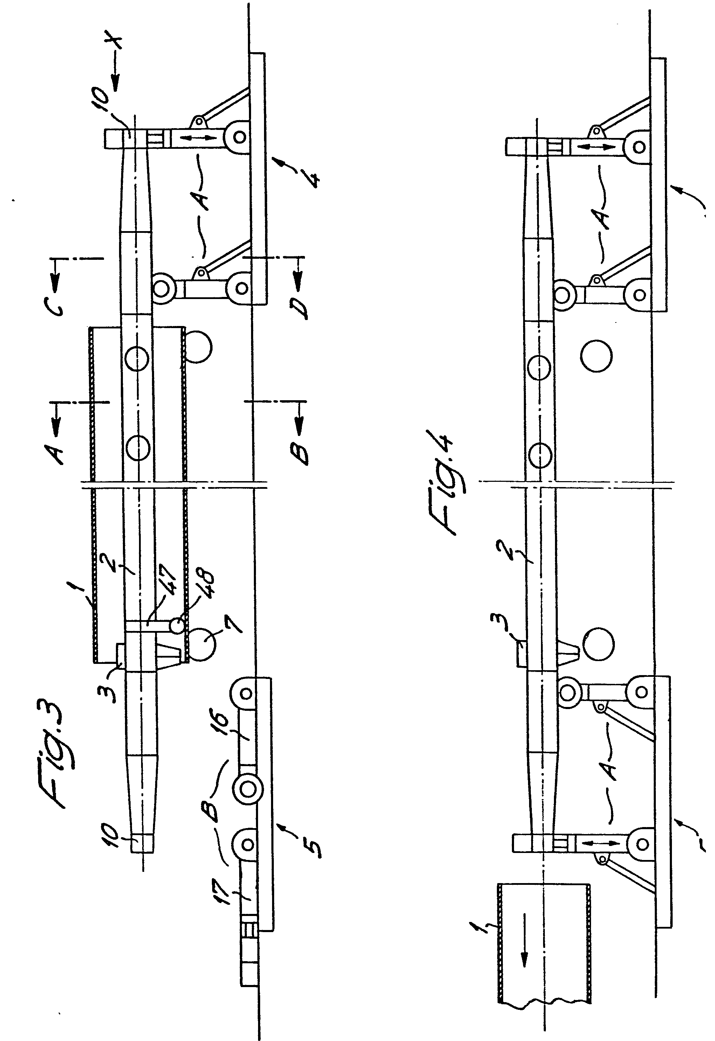

Wie aus Fig. 1 ersichtlich, wird ein bereits außen geschweißtes Rohr 1 in Richtung des Pfeiles auf einer ortsfesten Fördereinrichtung, z. B. auf angetriebenen Laufrollen, in die Vorrichtung eingefahren, wobei die Längsachse des Rohres 1 zweckmäßigerweise auf die Längsachse des Längsholmes 2 zentriert ist. Zum freien Einfahren des Rohres 1 wurden zuvor die beiden Stützen 14, 15 des Ständers 4 in die liegende Ruhestellung verschwenkt. Sobald das Rohr 1 in seiner gesamten Länge über den Längsholm 2 vorgeschoben worden ist und die in Fig. 2 rechten Endabschnitte 8, 10 des Laufholmes 2 aus seinem hinteren Ende frei herausragen, wird zuerst durch Beaufschlagen des Stellzylinders 23 die Stütze 14 in ihre Betriebsstellung A geschwenkt. Im letzten Teil dieser Schwenkbewegung gelangt die Laufrolle 37 mit der Unterfläche des Längsholmes 2 in Eingriff, wodurch der Laufholm 2 um das Maß seiner durch Eigengewicht und Elastizität bedingten Absenkung angehoben wird. Anschließend erfolgt das Aufschwenken der Stütze 15 in die Betriebsstellung A und das Betätigen des Spannzylinders 40, dessen zugeordnetes Druckstück 42 gegen den Gegenhalter drückt und damit das rechte Ende des Längsholmes 2 fest einspannt. Durch die Aufschwenkbewegung der Stützen 14 bzw. 15 werden - in den Fig. 1 bis 4 nicht dargestellte - Leistungsschalter 49 für die Zuführung des Schweißstromes zum Schweißkopf 3 geschlossen. Sobald die vordere Stirnkante des Rohres in den Bereich des Schweißkopfes gelangt und die Leistungsschalter geschlossen sind, beginnt der Schweißvorgang, wobei das Rohr durch den Antrieb 33 mit der vorgegebenen Schweißgeschwindigkeit unter dem Schweißkopf über die Laufrollenpaare 7 vorgeschoben wird. Der Beginn der Schweißung ist in Fig.3 dargestellt, wobei die beiden Stützen 16, 17 - die wie die Stützen 14, 15 gemäß Fig. 6 und 7 ausgebildet sein können - nach Lösen des Spannzylinders der Stütze 17 in ihre liegende Ruhestellung B geschwenkt worden sind. Nachdem die hintere Stirnkante des Rohres 1 unter dem Schweißkopf 3 hindurchgelaufen ist, wird die Stromzuführung zum Schweißkopf durch z. B. geeignete Endschalter unterbrochen. Anschließend werden die beiden Stützen 16, 17 des Ständers 5 in die in Fig.4 dargestellte Betriebsstellung verschwenkt und der den Endzapfen 10 festlegende Spannzylinder der Stütze 17 wird betätigt. Durch Umschwenken der beiden Stützen 14, 15 des Ständers 4 in ihre liegende Ruhestellung B befindet sich die Vorrichtung in der Betriebsstellung nach Fig. 1 zum Schweißen des nächstfolgenden Rohres.

Zur Verbesserung einer stabilen Halterung können am Längsholm in Fig. 2 dargestellte Streben 47 mit Schweißführungsrolle 48 befestigt sein, die an ihren freien unteren Enden sich über Laufrollen an der Innenwand des Rohres abstützen. Zweckmäßigerweise sind diese Streben 47 oberhalb der Laufrollen 7 des äußeren Traggestells im Bereich des Schweißkopfes 3 angeordnet und mit Dämpfungselementen versehen, die einerseits ein Einfahren des Rohres zwischen die Laufrollen 7, 48 ohne größere Schläge ermöglichen, andererseits aber ausreichend steif sind, um eine zusätzliche Tragfunktion für den Tragholm 2 zu übernehmen, wenn die Stützen 16, 17 in die in Fig. 3 dargestellte Ruhelage B geschwenkt sind. Die Dämpfungselemente in den Streben 47 können z. B. Schraubenfedern oder Gummipolster sein.

Die Erfindung ist nicht auf die dargestellte Ausführung beschränkt. So können beispielsweise die Ständer entweder nur eine einzige breite Stütze oder aber mehr als zwei Stützen aufweisen. Ferner können die Stützen auch fest an den jeweiligen Tragrahmen angeordnet und diese Tragrahmen quer zur Durchlaufrichtung der einzelnen Rohre in Führungen verschiebbar ausgebildet sein, wobei dann in jeder Stütze seitliche Einfahröffnungen zur Aufnahme des Längsholmes vorgesehen sind.

Die vorstehend beschriebene Schweißvorrichtung ist für sog. Großrohre mit lichtem Durchmesser über 500 mm und beliebigen Längen von z.B. 6 - 18 m geeignet.

- 1 -

## Ansprüche

1. Vorrichtung zum elektrischen Innenschweißen von Großrohren, bestehend aus mindestens einem Ständer, aus einem vom Ständer horizontal gehaltenen Längsholm, an dem mindestens ein Schweißkopf, Führungen für mindestens einen Schweißdraht sowie Halterungen für die elektrischen Kabel und für Schutzgasleitungen angeordnet sind, und aus einem äußeren Traggestell mit angetriebenen Stützrollen für das zu schweißende Großrohr, d a d u r c h   g e k e n n z e i c h n e t, daß an jedem Ende des Längsholmes (2) ein Ständer (4, 5) vorgesehen ist und daß jeder Ständer (4, 5) eine lösbare Spann- und Verriegelungseinrichtung (40 bis 42) sowie elektrische Leistungsschalter aufweist und aus einer den Längsholm (2) haltenden Betriebsstellung (A) in eine den Durchlauf des Großrohres (1) zulassende Ruhestellung (B) bewegbar ist.

2. Vorrichtung nach Anspruch 1, dadurch gekennzeichnet, daß am Längsholm (2) mindestens eine Schweißdrahtspule (11) angeordnet ist.

3. Vorrichtung nach Anspruch 1 oder 2, dadurch gekennzeichnet, daß jeder Ständer (4, 5) an einem im Bodenniveau angeordneten Tragrahmen (12, 13) angelenkt und aus seiner liegenden Ruhestellung (B) in die aufrechte Betriebsstellung (A) - und umgekehrt-schwenkbar ist.

143-x2095-SdF

4. Vorrichtung nach einem der Ansprüche 1 bis 3, dadurch gekennzeichnet, daß jeder Ständer (4, 5) jeweils zwei Stützen (14, 15; 16, 17) aufweist, von denen die jeweils äußere Stütze (15; 17) die Spann- und Verriegelungseinrichtung (40 bis 43) trägt.

5. Vorrichtung nach Anspruch 4, dadurch gekennzeichnet, daß die beiden Stützen (14, 15; 16, 17) jedes Ständers (4; 5) auf einem gemeinsamen Tragrahmen (12; 13) einzeln durch gesonderte hydraulische Stellzylinder (22 bis 25) schwenkbar angeordnet sind.

6. Vorrichtung nach Anspruch 4 oder 5, dadurch gekennzeichnet, daß die jeweils innere Stütze (15; 16) jedes Ständers (4; 5) an ihrem oberen Ende eine Stützrolle (37) zur zentrierenden Abstützung des Längsholmes (2) trägt.

7. Vorrichtung nach einem der Ansprüche 1 bis 6, dadurch gekennzeichnet, daß die Spann- und Verriegelungseinrichtung (40 bis 43) einen hydraulischen Spannzylinder (40) enthält, an dessen Kolbenstange (41) ein Druckstück (42) mit einer an die Querschnittsform des Längsholm-Endes (10) angepaßten Aufnahme (43) befestigt ist.

8. Vorrichtung nach einem der Ansprüche 1 bis 7, dadurch gekennzeichnet, daß der Längsholm (2) aus einem Vierkant-Hohlprofil und beidseitig aus einem konischen Übergangsstück (8, 9) sowie aus je einem zylindrischen Endzapfen (10, 11) besteht.

9. Vorrichtung nach einem der Ansprüche 1 bis 8, dadurch gekennzeichnet, daß der Schweißkopf (3) an dem in Rohrförderrichtung hinteren Endbereich des Längsholmes (2) angeordnet ist.

0046984

- 3 -

10. Vorrichtung nach einem der Ansprüche 1 bis 9, dadurch gekennzeichnet,daß am Längsholm (2) zumindest im Bereich des Schweißkopfes (3) Stützelemente (47, 48) befestigt sind, die mit ihrem freien Ende über z. B. Laufrollen (48) an der Rohrinnenwand abgestützt sind.

# Fig.1

# Fig.2

Fig.3

Fig.4

0046984

Fig.5

Fig.6

Fig.7